(19) Europäisches Patentamt
European Patent Office
Office européen des brevets

(11) **EP 2 200 174 A1**

(12) **EUROPEAN PATENT APPLICATION**
published in accordance with Art. 153(4) EPC

(43) Date of publication:
**23.06.2010 Bulletin 2010/25**

(51) Int Cl.:
**H02P 21/00** (2006.01)   **H02P 27/04** (2006.01)

(21) Application number: **08838032.4**

(22) Date of filing: **08.10.2008**

(86) International application number:
**PCT/JP2008/068266**

(87) International publication number:
**WO 2009/048066 (16.04.2009 Gazette 2009/16)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **12.10.2007 JP 2007266269**

(71) Applicant: **Kabushiki Kaisha Yaskawa Denki
Kitakyushu-shi, Fukuoka 806-0004 (JP)**

(72) Inventors:
• **WATANABE, Junichi**
  **Kitakyushu-Shi, Fukuoka 806-0004 (JP)**
• **SAKURAI, Shigeru**
  **Kitakyushu-Shi, Fukuoka 806-0004 (JP)**

(74) Representative: **Gendron, Vincent Christian et al
S.A. Fedit-Loriot
38, avenue Hoche
75008 Paris (FR)**

(54) **MOTOR CONTROL DEVICE AND MAGNETIC POLE POSITION ESTIMATION METHOD**

(57)   A motor control device which can estimate a magnetic pole position even in case of large friction or a heavy load and which further is not affected by motor cogging torque or disturbance and a magnetic pole position estimation method are provided.

The motor control device has a magnetic pole position estimator (9), wherein the magnetic pole position estimator has a low-accuracy magnetic pole position estimator (22) which generates a first estimated rough magnetic pole position at a unit of ten degrees, a high-accuracy magnetic pole position estimator (23) which generates a second estimated accurate magnetic pole position at a unit of one degree after the first estimated magnetic pole position is generated, an estimated magnetic pole position selector (24) which selects one of the first estimated magnetic pole position and the second estimated magnetic pole position, and an automatic speed instruction generator (21) which generates a speed instruction for the magnetic pole position estimation.

FIG.1

**Description**

Technical Field

The present invention relates to a magnetic pole position estimation method using an encoder that has no function for detecting a magnetic pole and to a motor control device which uses the method.

Background Art

According to an existing magnetic pole position estimation method, the method includes the steps of: applying a current with a phase divided by n to a motor; identifying a moving direction (+, 0, -) at that time; applying again a current with a phase corresponding to a mean value of an electric angular of a region where the moving direction changes from (+) to (-); repeating above steps several times; determining the resulting phase where the moving direction is (0) as the phase where generated electromagnetic power becomes zero; and determining an input current phase with respect to the resulting phase (refer to Patent Document 1).

[Patent Document 1]
JP-A-2006-296027

Disclosure of Invention

Problems to be Solved by the Invention

The existing magnetic pole position estimation method of the Patent Document 1 has a problem in that a motor does not work at all and the magnetic pole position cannot be estimated in spite of an applied current in some cases where friction is large and a load is heavy. Further, since a phase where generated electromagnetic power becomes zero is searched for, estimation accuracy of the magnetic pole position is adversely affected by motor cogging torque and disturbance when they are large, and is reduced.
The present invention is made in view of these problems, and has an object to provide a motor control device which may estimate a magnetic pole position even in case of large friction or a heavy load is applied, and may not be affected by motor cogging torque or disturbance, and further to provide a magnetic pole position estimation method.

Means for Solving the Problems

In order to solve the above problems, the present invention is configured as follows.
An invention described as Claim 1 is a motor control device having: an electric angle operation section which converts a rotation angle of a synchronous motor detected by an encoder without a magnetic pole detecting function into an electric angle with respect to a position where power is turned on; a magnetic pole position estimator which estimates a magnetic pole position using the electric angle and generates an estimated magnetic pole position; a speed operation section which converts the rotation angle to a rotation speed; a speed controller which generates d-axis and q-axis current instructions based on the rotation speed and a speed instruction; a current sensor which detects a three-phase current of the synchronous motor; a three-phase/two-phase converter which converts the three-phase current to d-axis and q-axis currents; a current controller which generates d-axis and q-axis voltage instructions based on the d-axis and q-axis currents and the d-axis and q-axis current instructions; a two-phase/three-phase converter which converts the d-axis and q-axis voltage instructions to U, V, and W-phase voltage instructions; and a PWM power converter, which pulse-width-modulates and power-amplifies the U, V, and W-phase voltage instructions, drives the synchronous motor, wherein the magnetic pole position estimator has: a low-accuracy magnetic pole position estimator which generates a first estimated rough magnetic pole position at a unit of ten degrees; a high-accuracy magnetic pole position estimator which generates a second estimated accurate magnetic pole position at a unit of one degree after the first estimated magnetic pole position is generated; an estimated magnetic pole position selector which selects one of the first estimated magnetic pole position and the second estimated magnetic pole position; an automatic speed instruction generator which generates a speed instruction for the magnetic pole position estimation, and the motor control device further has a speed instruction selector which selects one of the speed instruction for the magnetic pole position estimation and a regular speed instruction.

An invention described as Claim 2 is the motor control device according to Claim 1, wherein the low-accuracy magnetic pole position estimator: divides a motor electric angle of 360 degrees by an integer n equal to or more than 4; sets an each center of respective electric angle regions to a magnetic pole position of 0 degrees; allows operation according to an automatically generated speed instruction; generates the first estimated magnetic pole position from a distribution of one of the electric angle regions in which a rotation happens in a direction opposite to that of the speed instruction (called a reverse run hereinafter).

An invention described as Claim 3 is the motor control device according to Claim 1, wherein the low-accuracy magnetic pole position estimator causes a middle position of a distribution of an electric angle region in which a reverse run happens to be the first estimated magnetic pole position.

An invention described as Claim 4 is the motor control device according to Claim 1, wherein the automatic speed instruction generator causes the speed instruction to be zero immediately after identifying a reverse run, and the low-accuracy magnetic pole position estimator adds 180 degrees to a present magnetic pole position.

An invention described as Claim 5 is the motor control device according to Claim 1, wherein the low-accuracy magnetic pole position estimator increases a speed control gain by a certain quantity for the magnetic pole position estimation when the number of reverse runs is out of a range having been set in advance.

An invention described as Claim 6 is the motor control device according to Claim 1, wherein the high-accuracy magnetic pole position estimator compares a first q-axis current maximum value that is a q-axis current instruction maximum value in case of an operation according to a speed instruction for the magnetic pole position estimation at the magnetic pole position added by 45 degrees to the first estimated magnetic pole position and a second q-axis current maximum value that is a q-axis current instruction maximum value in case of subtraction of 45 degrees from the first estimated magnetic pole position, the high-accuracy magnetic pole position estimator making the second estimated magnetic pole position by subtracting and adding a certain angle from and to the first estimated magnetic pole position when the first q-axis current maximum value > the second q-axis current maximum value and when the first q-axis current maximum value < the second q-axis current maximum value, respectively, the high-accuracy magnetic pole position estimator generating the second estimated magnetic pole position by repeatedly adding or subtracting a certain angle to and from the second estimated magnetic pole position instead of the first estimated magnetic pole position until a difference between the first q-axis current maximum value and the second q-axis current maximum value becomes equal to or less than a certain value.

An invention described as Claim 7 is the motor control device according to Claim 6, wherein the high-accuracy magnetic pole position estimator identifies an end of high-accuracy magnetic pole position estimation by the number of repetition instead of the difference between the first q-axis current maximum value and the second q-axis current maximum value equal to or less than the certain value, the high-accuracy magnetic pole position estimator generating the second estimated magnetic pole position by adding or subtracting $1/2^m$ times a certain angle when the number of repetition is a settable positive integer m.

An invention described as Claim 8 is the motor control device according to Claim 1, wherein a first q-axis current maximum value that is a q-axis current instruction maximum value in case of a use of a magnetic pole position added by $\alpha$ degrees that is set to the first estimated magnetic pole position and an operation according to a speed instruction for the magnetic pole position estimation is Iqm1, and a second q-axis current maximum value that is a q-axis current instruction maximum value in case of subtraction of $\alpha$ degrees from the first estimated magnetic pole position is Iqm2, the high-accuracy magnetic pole position estimator generating the second estimated magnetic pole position by adding $(360/2\pi)\tan^{-1}((Iqm2-Iqm1)/((Iqm1+Iqm2)\tan(\alpha)))$ to the first estimated magnetic pole position.

An invention described as Claim 9 is the motor control device according to Claim 8, wherein the $\alpha$ is equal to 45.

An invention described as Claim 10 is a magnetic pole position estimation method of a motor control device having: an electric angle operation section which converts a rotation angle of a synchronous motor detected by an encoder without a magnetic pole detecting function into an electric angle with respect to a position where power is turned on; a magnetic pole position estimator which estimates a magnetic pole position using the electric angle and generates an estimated magnetic pole position; a speed operation section which converts the rotation angle to a rotation speed; a speed controller which generates d-axis and q-axis current instructions based on the rotation speed and a speed instruction; a current sensor which detects a three-phase current of the synchronous motor; a three-phase/two-phase converter which converts the three-phase current to d-axis and q-axis currents; a current controller which generates d-axis and q-axis voltage instructions based on the d-axis and q-axis currents and the d-axis and q-axis current instructions; a two-phase/three-phase converter which converts the d-axis and q-axis voltage instructions to U, V, and W-phase voltage instructions; and a PWM power converter, which pulse-width-modulates and power-amplifies the U, V, and W-phase voltage instructions, drives the synchronous motor, including Step S1 for generating a first estimated rough magnetic pole position at a unit of ten degrees, and Step S2 for generating a second estimated accurate magnetic pole position at a unit of one degree after the first estimated magnetic pole position is generated.

An invention described as Claim 11 is the magnetic pole position estimation method of the motor control device according to Claim 10, wherein Step S1 includes a step for dividing a motor electric angle of 360 degrees by an integer n equal to or more than 4, a step for setting an each center of respective electric angle regions to a magnetic pole position of 0 degrees, and a step for generating the first estimated magnetic pole position from a distribution of one of the electric angle regions in which a reverse run happens.

An invention described as Claim 12 is the magnetic pole position estimation method of the motor control device according to Claim 10, wherein Step S2 includes a step for causing a q-axis current instruction maximum value in case of an operation according to a speed instruction for the magnetic pole position estimation at the magnetic pole position added by 45 degrees to the first estimated magnetic pole position to be a first q-axis current maximum value, a step for causing a q-axis current instruction maximum value in case of subtraction of 45 degrees from the first estimated magnetic pole position to be a second q-axis current maximum value, a step for making the second estimated magnetic pole position by subtracting and adding a certain angle from and to the first estimated magnetic pole position when the first q-axis current maximum value > the second q-axis current maximum value and when the first q-axis current maximum value < the second q-axis current maximum value, respectively, wherein the motor control device generates the second estimated magnetic pole position by repeatedly adding or subtracting the certain angle to and from the second estimated magnetic pole position instead of the first estimated magnetic pole position until a difference between the first q-axis current maximum value and the second q-axis current maximum value becomes equal to or less than a certain value.

An invention described as Claim 13 is the magnetic pole position estimation method of the motor control device according to Claim 10, wherein Step S2 is for identifying an end of high-accuracy magnetic pole position estimation by the number of repetition instead of the difference between the first q-axis current maximum value and the second q-axis current maximum value equal to or less than the certain value, Step S2 being for generating the second estimated magnetic pole position by adding or subtracting $1/2^m$ times a certain angle when the number of repetition is a settable positive integer m.

An invention described as Claim 14 is the magnetic pole position estimation method of the motor control device according to Claim 10, wherein Step S2 includes a step for causing a first q-axis current maximum value that is a q-axis current instruction maximum value in case of a use of a magnetic pole position added by $\alpha$ degrees that is set to the first estimated magnetic pole position and an operation according to a speed instruction for the magnetic pole position estimation to be Iqm1, a step for causing a second q-axis current maximum value that is a q-axis current instruction maximum value in case of subtraction of $\alpha$ degrees from the first estimated magnetic pole position to be Iqm2, and a step for generating the second estimated magnetic pole position by adding $(360/2\pi)\tan^{-1}((Iqm2-Iqm1)/((Iqm1+Iqm2)\tan(\alpha)))$ to the first estimated magnetic pole position.

An invention described as Claim 15 is the magnetic pole position estimation method of the motor control device according to Claim 14, wherein the $\alpha$ is equal to 45. Advantages

According to the present invention, a magnetic pole position can be estimated even in case of large friction or a heavy load. Further, a magnetic pole position estimation method not affected by motor cogging torque or disturbance and a motor control device which uses the method can be provided.

Brief Description of Drawings

[Fig. 1] Fig. 1 is a block diagram which shows a configuration of a motor control device of the present invention.
[Fig. 2] Fig. 2 is a block diagram which shows a configuration of a magnetic pole position estimator of the present invention.
[Fig. 3] Fig. 3 shows a speed instruction to be used by a magnetic pole position estimation method of the present invention.
[Fig. 4] Fig. 4 is a flowchart which shows an operation of Step S1 for low-accuracy magnetic pole position estimation of the magnetic pole position estimation method of the present invention.
[Fig. 5] Fig. 5 shows a principle of Step S2 for high-accuracy magnetic pole position estimation of the magnetic pole position estimation method of the present invention.
[Fig. 6] Fig. 6 shows the principle of Step S2 of the magnetic pole position estimation method of the present invention.
[Fig. 7] Fig. 7 is a flowchart which shows an operation of Step S2 of the magnetic pole position estimation method of the present invention.

Reference Numerals

1    speed controller
2    current controller
3    two-phase/three-phase converter
4    PWM power converter
5    current sensor
6    three-phase/two-phase converter

7 electric angle operation section
8 speed operation section
9 magnetic pole position estimator
10 speed instruction selector
11 synchronous motor
12 encoder
21 automatic speed instruction generator
22 low-accuracy magnetic pole position estimator
23 high-accuracy magnetic pole position estimator
24 estimated magnetic pole position selector

Best Mode for Carrying Out the Invention

Specific examples of a magnetic pole position estimation device and its method for estimation will be explained below with reference to the drawings.

EXAMPLE 1

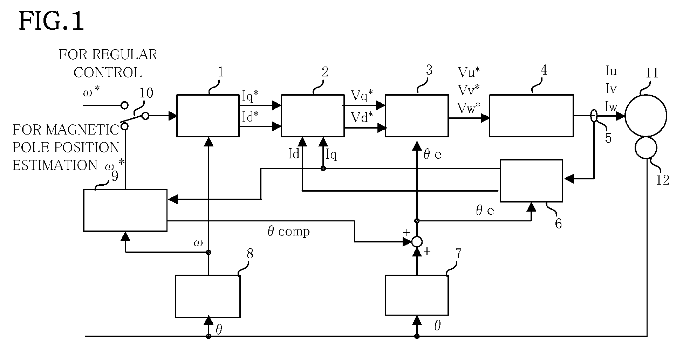

Fig. 1 is a block diagram showing a configuration of the present invention. In Fig. 1, reference numerals 1-5 indicate a speed controller, a current controller, a two-phase/three-phase converter, a PWM power converter and a current sensor, respectively. Reference numerals 6-10 indicate a three-phase/two-phase converter, an electric angle operation section, a speed operation section, a magnetic pole position estimator and a speed instruction selector, respectively. Further, reference numerals 11 and 12 indicate a synchronous motor and an encoder, respectively.

Then, an operation will be explained. The speed controller 1 generates a d-axis current instruction Id* and a q-axis current instruction Iq* based on a speed deviation between a speed instruction $\omega$* and a rotation speed $\omega$. The current controller 2 generates a d-axis voltage instruction Vd* based on the d-axis current instruction Id* and a d-axis current Id, and generates a q-axis voltage instruction Vq* based on the q-axis current instruction Iq* and a q-axis current Iq. The two-phase/three-phase converter 3 generates a U-phase voltage instruction Vu*, a V-phase voltage instruction Vv* and a W-phase voltage instruction Vw* of a three-phase voltage instruction based on the d-axis voltage instruction Vd*, the q-axis voltage instruction Vq* and an electric angle $\theta$e of a dq-axes voltage instruction. The PWM power converter 4 causes the three-phase voltage instruction to be a PWM signal, amplifies power, and drives the synchronous motor 11. The encoder 12 with no magnetic pole detecting function detects a position of the motor 11 and generates data on a motor position. The electric angle operation section 7 generates the electric angle $\theta$e with respect to a motor position at the time of power turn-on. The speed operation section 8 uses a time differential of the motor position and generates a motor speed.

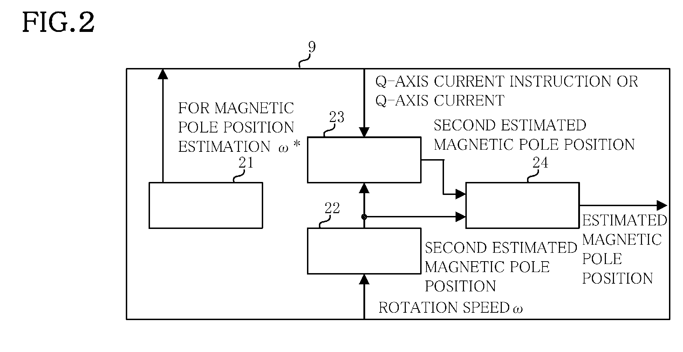

Then, an operation of the magnetic pole position estimator of the present invention will be explained. Fig. 2 is a block diagram showing a configuration of the magnetic pole position estimator 9. In Fig. 2, reference numerals 21-24 indicate an automatic speed instruction generator, a low-accuracy magnetic pole position estimator, a high-accuracy magnetic pole position estimator, and an estimated magnetic pole position selector, respectively. The automatic speed instruction generator 21 automatically generates a speed instruction for speed instruction magnetic pole position estimation during magnetic pole position estimation. The speed instruction selector 10 selects a speed instruction for magnetic pole position estimation and provides the speed controller 1 with the selected speed instruction. The speed controller 1 performs speed control based on the speed instruction for magnetic pole position estimation and the motor speed. The low-accuracy magnetic pole position estimator 22 identifies whether a normal operation or a reverse run has happened with reference to speed data provided from the speed operation section 9, and generates a first estimated magnetic pole position $\theta$es1. The high-accuracy magnetic pole position estimator 23 generates a second estimated magnetic pole position $\theta$es2 from the q-axis current instruction Iq* or the q-axis current Iq in operation according to the speed instruction. The estimated magnetic pole position selector selects the second estimated magnetic pole position instead of the first estimated magnetic pole position.

Then, a speed instruction used for the present invention will be explained.

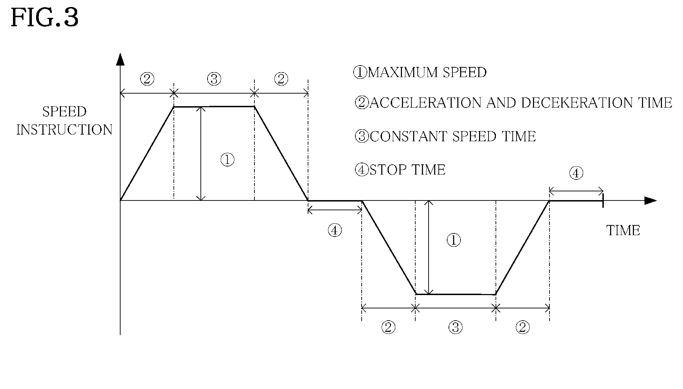

Fig. 3 shows a speed instruction used for the present invention. The profile of the graph of speed has a pair of positive portion and negative portion so that a rotor of the motor returns to the same position. Further, a maximum speed, an acceleration and deceleration time, a constant speed time and a stop time can be chosen without restraint.

Then, a low-accuracy magnetic pole position estimating Step S1 of the magnetic pole position estimation method of the present invention will be explained.

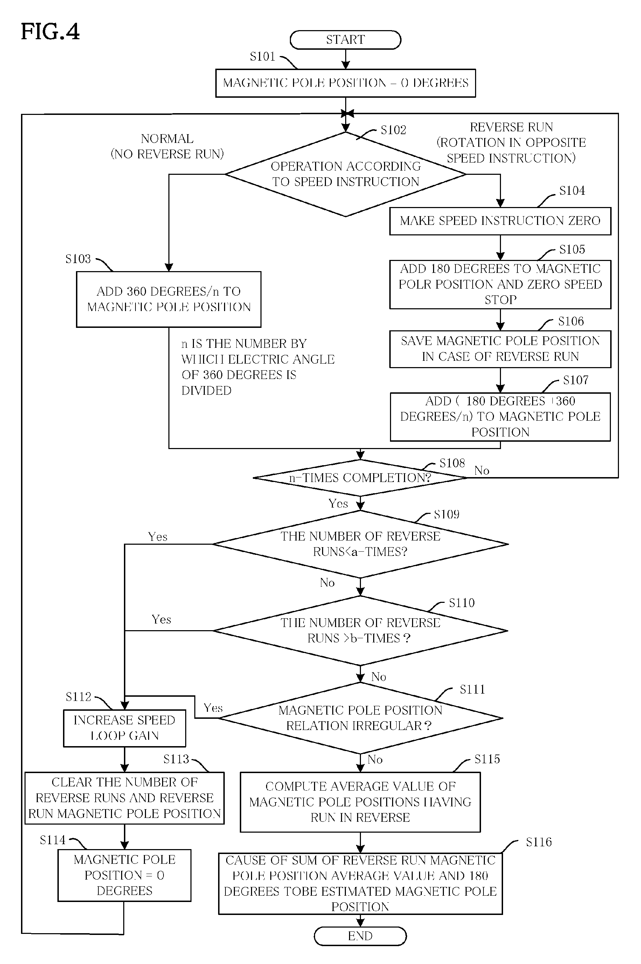

Fig. 4 shows a flowchart of Step S1.
At Step S101, set the magnetic pole position to 0 degrees and go to Step S102. At Step S102, check operation according to the speed instruction shown in Fig. 3. In case of rotation in a normal direction, go to Step S103. In case of a reverse run, go to Step S104. Then, add 360 degrees/n to a present magnetic pole position so as to change the magnetic pole position to a next region at Step S103, and go to Step S108. Adjust the speed instruction zero at Step S104, and go to Step S105. Add 180 degrees to the electric angle corresponding to the present magnetic pole position at Step S105, and go to Step S106. Save data on the magnetic pole position in case of a reverse run (the electric angle of the present magnetic pole position is -180 degrees) at Step S106, and go to Step S107. Add (-180+360/n) degrees to the present magnetic pole position so as to change the magnetic pole position to a next region at Step S107, and go to Step S108. Check n-times (all regions) completion at Step S108, and go to Step S109 after the n-times completion, and return to Step S102 before the completion. Check the number of reverse runs at Step S109, and go to Step S110 when the number is equal to or more than "a", which is an integer and is equal to or more than 1 and equal to or less than "b", and go to Step S112 when the number is less than a. Check the number of reverse runs at Step S110, and go to Step S111 when the number is equal to or more than b, which is an integer and is equal to or more than a and equal to or less than "n", and go to Step S112 when the number is more than b. Read for consistency between reverse run magnetic pole positions at Step S111, and go to Step S115 in case that the relation between the magnetic pole positions is consistent, and go to Step S112 in case that the relation is inconsistent. Increase a speed loop gain at Step S112, and go to Step S113. Clear the data on the number of reverse runs and the reverse run magnetic pole positions at Step S113, and go to Step S114. Adjust the magnetic pole position 0 degrees at Step S114, and go to Step S102. Calculate an average value of the electric angles corresponding to the magnetic pole positions that have run in reverse, and go to Step S116. Add 180 degrees to an average electric angle corresponding to a reverse run magnetic pole position at Step S116. The resulting angle is referred to as "position estimated at Step S1."

Then, a high-accuracy magnetic pole position estimating Step S2 of the magnetic pole position estimation method of the present invention will be explained.

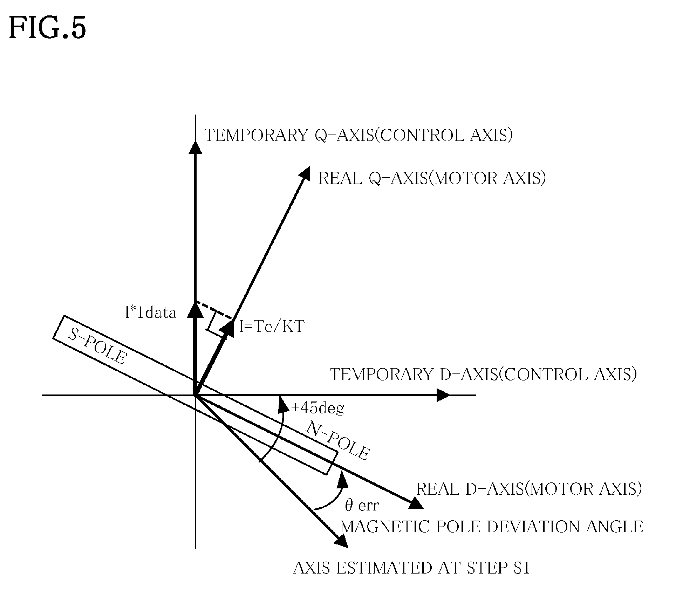

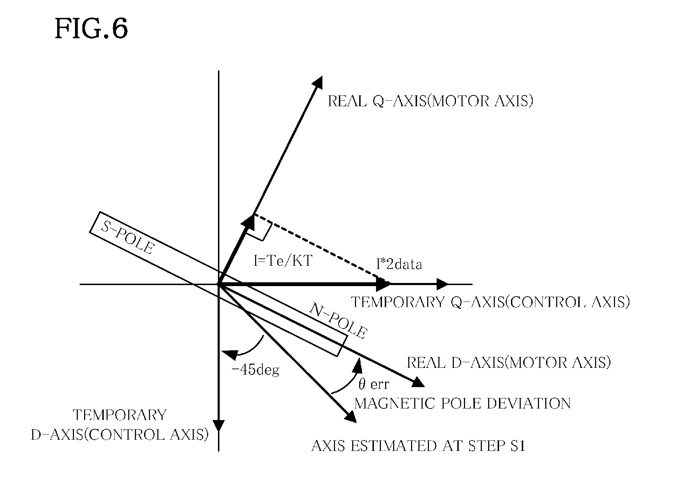

Figs. 5 and 6 show a principle of Step S2 required to perform high-accuracy magnetic pole position estimation.

At Step S2, add 45 degrees to the electric angle of the first estimated magnetic pole position estimated at Step S1 as shown in Fig. 5, and let a q-axis current instruction which is necessary in case of operation according to the speed instruction shown in Fig. 3 be Iq*1data. Then, subtract 45 degrees from the electric angle of the magnetic pole position estimated at Step S1 as shown in Fig. 6. Upon letting the q-axis current instruction which is necessary in case of operation according to the speed instruction shown in Fig. 3 be Iq*2data, a magnetic pole position deviation angle θerror can be calculated according to a following equation.

$$\theta error = \tan^{-1}(Iq*2data/Iq*1data) - \pi/4 \quad (1)$$

When the ratio between Iq*2data and Iq*1data is large, however, an ideal value of the ratio is not obtained in some cases depending upon the magnitude of the speed loop gain, heaviness of the load and the motor cogging torque. Thus, instead of correcting the magnetic pole position using the equation (1) at a time, a direction in which a rotor is rotated, is determined based on a difference in the values of Iq*1data and Iq*2data. Then, correct the first estimated magnetic pole position by a certain angle and determine it as a second estimated magnetic pole position. Then, correct the second estimated magnetic pole position by a certain angle θa and determine it as a new second estimated magnetic pole position. Repeat this process. Divide the angle of the correction by two for every repetition. That is, give θa, θa/2, θa/4, ..., θa/2$^m$ at first, second, third, ..., m-th times, respectively.

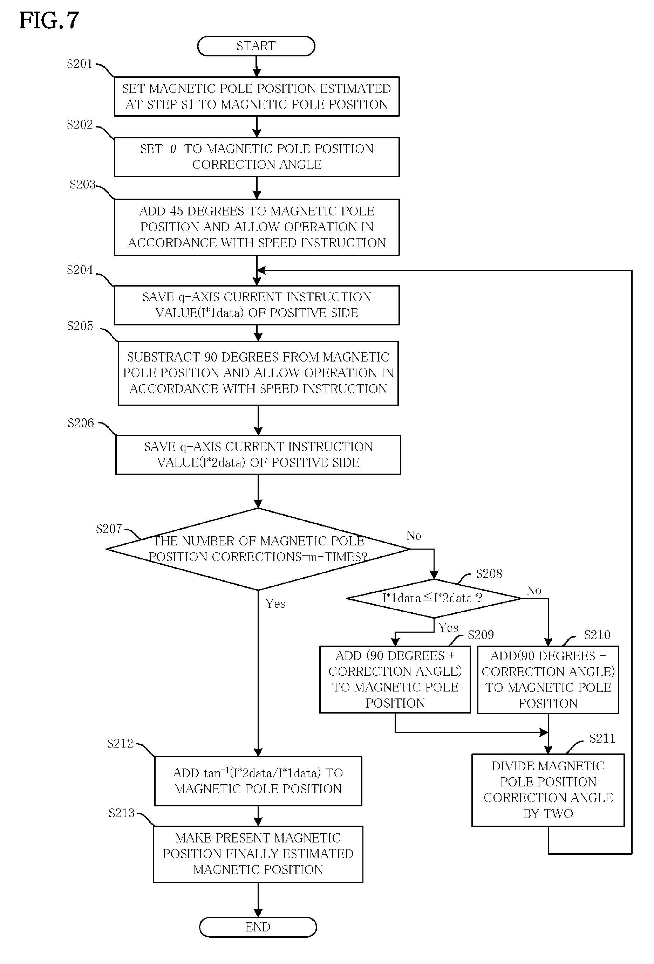

Fig. 7 shows a flowchart of Step S2. Set the first estimated magnetic pole position estimated at Step S1 to the magnetic pole position at Step S201, and go to Step S202. Set θa that is settable to a magnetic pole position correction angle at Step S202, and go to Step S203. Add 45 degrees to an electric angle corresponding to the magnetic pole position and let the motor operate according to the speed instruction shown in Fig. 2 at Step S203, and go to Step S204. Save the q-axis current instruction value Iq*1data of the speed instruction, which is shown in Fig. 2, while the rotor rotates in the positive direction at Step S204, and go to Step S205. The q-axis current instruction value may be any one of the average and maximum values while the rotor rotates in the positive direction and the q-axis current instruction value while the rotor rotates in the negative direction. Subtract 90 degrees from an electric angle corresponding to the magnetic pole position and let the motor operate according to the speed instruction shown in Fig. 2, at Step S205, and go to Step S206. Save the q-axis current instruction value Iq*2data of the speed instruction, which is shown in Fig. 2, while the rotor rotates in the positive direction, at Step S206, and go to Step S207. The q-axis current instruction value may be any one of the average and maximum values while the rotor rotates in the positive direction and the q-axis current instruction value while the rotor rotates in the negative direction. Check the number of the magnetic pole position corrections at Step S207, and go to steps 212 and 208 when the number is m and else, respectively. Compare the magnitudes of Iq*1data and Iq*2data at Step S208, and go to steps S209 and S210 when Iq*1data is equal to or less than Iq*2data and when Iq*1data is more than I*2data, respectively. Add (90+magnetic pole position correction angle) degrees to the magnetic pole position at Step S209, and go to the step 211. Add (90 - magnetic pole position correction angle) degrees to the magnetic pole position at Step S210, and go to the step 211. Divide the magnetic pole position correction angle by two at Step S211, and go to Step S204. Add tan$^{-1}$ (Iq*2data/Iq*1data) to the magnetic pole position at Step S212 and go to Step S213. Determine the present magnetic pole position as a final value of the second estimated magnetic pole position.

Another method of the high-accuracy magnetic pole position estimation is to cause a first q-axis current maximum value that is a q-axis current instruction maximum value in case of a use of a magnetic pole position, i.e., a sum of the first estimated magnetic pole position and $\alpha$ degrees that is settable, and operation according to a speed instruction for magnetic pole position estimation to be Iqm1. Further, cause a second q-axis current maximum value that is the q-axis current instruction maximum value in case of a subtraction of $\alpha$ degrees from the first estimated magnetic pole position to be Iqm2. As to the second estimated magnetic pole position, then, add $(360/2\pi)\tan^{-1}((\text{Iqm2-Iqm1})/((\text{Iqm1+Iqm2})\tan(\alpha)))$ to the first estimated magnetic pole position, and determine it as a final value of the second estimated magnetic pole position. That is, it is used that generated torque decreases to $\cos(\theta\text{err})$ for a magnetic pole position deviation angle $\theta$err. A q-axis current required for generating necessary torque Tq in case of a further deviation of $+/-\alpha$ degrees from $\theta$err is Tq = Iqm1*$\cos(\theta\text{err}+\alpha)$*Kt = Iqm2*$\cos(\theta\text{err}-\alpha)$, where Kt is a torque constant. When $\alpha$ = 45 degrees, the operation for calculating $\theta$err can be simplified as $\tan(\alpha)=1$.

Industrial Applicability

The present invention is described for an example of a rotational synchronous motor, and is similarly effective for a linear motor.

**Claims**

1. A motor control device having: an electric angle operation section which converts a rotation angle of a synchronous motor detected by an encoder without a magnetic pole detecting function into an electric angle with respect to a position where power is turned on; a magnetic pole position estimator which estimates a magnetic pole position using the electric angle and generates an estimated magnetic pole position; a speed operation section which converts the rotation angle to a rotation speed; a speed controller which generates d-axis and q-axis current instructions based on the rotation speed and a speed instruction; a current sensor which detects a three-phase current of the synchronous motor; a three-phase/two-phase converter which converts the three-phase current to d-axis and q-axis currents; a current controller which generates d-axis and q-axis voltage instructions based on the d-axis and q-axis currents and the d-axis and q-axes current instructions; a two-phase/three-phase converter which converts the d-axis and q-axis voltage instructions to U, V, and W-phase voltage instructions; and a PWM power converter, which pulse-width-modulates and power-amplifies the U, V, and W-phase voltage instructions, drives the synchronous motor, wherein:

   the magnetic pole position estimator has: a low-accuracy magnetic pole position estimator which generates a first estimated rough magnetic pole position at a unit of ten degrees; a high-accuracy magnetic pole position estimator which generates a second estimated accurate magnetic pole position at a unit of one degree after the first estimated magnetic pole position is generated; an estimated magnetic pole position selector which selects one of the first estimated magnetic pole position and the second estimated magnetic pole position; an automatic speed instruction generator which generates a speed instruction for the magnetic pole position estimation; and
   the motor control device further has a speed instruction selector which selects one of the speed instruction for the magnetic pole position estimation and a regular speed instruction.

2. The motor control device according to Claim 1, wherein the low-accuracy magnetic pole position estimator: divides a motor electric angle of 360 degrees by an integer n equal to or more than 4; sets an each center of respective electric angle regions to a magnetic pole position of 0 degrees; allows operation according to an automatically generated speed instruction; generates the first estimated magnetic pole position from a distribution of one of the electric angle regions in which a rotation happens in a direction opposite the speed instruction (called a reverse run hereinafter).

3. The motor control device according to Claim 1, wherein the low-accuracy magnetic pole position estimator causes a middle position of a distribution of an electric angle region in which a reverse run happens to be the first estimated magnetic pole position.

4. The motor control device according to Claim 1, wherein the automatic speed instruction generator causes the speed instruction to be zero immediately after identifying a reverse run, and the low-accuracy magnetic pole position estimator adds 180 degrees to a present magnetic pole position.

5. The motor control device according to Claim 1, wherein the low-accuracy magnetic pole position estimator increases a speed control gain by a certain quantity for the magnetic pole position estimation when the number of reverse runs is out of a range having been set in advance.

6. The motor control device according to Claim 1, wherein the high-accuracy magnetic pole position estimator compares a first q-axis current maximum value that is a q-axis current instruction maximum value in case of an operation according to a speed instruction for the magnetic pole position estimation at the magnetic pole position added by 45 degrees to the first estimated magnetic pole position and a second q-axis current maximum value that is a q-axis current instruction maximum value in case of subtraction of 45 degrees from the first estimated magnetic pole position, the high-accuracy magnetic pole position estimator making the second estimated magnetic pole position by subtracting and adding a certain angle from and to the first estimated magnetic pole position when the first q-axis current maximum value > the second q-axis current maximum value and when the first q-axis current maximum value < the second q-axis current maximum value, respectively, the high-accuracy magnetic pole position estimator generating the second estimated magnetic pole position by repeatedly adding or subtracting a certain angle to and from the second estimated magnetic pole position instead of the first estimated magnetic pole position until a difference between the first q-axis current maximum value and the second q-axis current maximum value becomes equal to or less than a certain value.

7. The motor control device according to Claim 6, wherein the high-accuracy magnetic pole position estimator identifies an end of high-accuracy magnetic pole position estimation by the number of repetition instead of the difference between the first q-axis current maximum value and the second q-axis current maximum value equal to or less than the certain value, the high-accuracy magnetic pole position estimator generating the second estimated magnetic pole position by adding or subtracting $1/2^m$ times a certain angle when the number of repetition is a settable positive integer m.

8. The motor control device according to Claim 1, wherein a first q-axis current maximum value that is a q-axis current instruction maximum value in case of a use of a magnetic pole position added by $\alpha$ degrees that is settable to the first estimated magnetic pole position and an operation according to a speed instruction for the magnetic pole position estimation is Iqm1, and a second q-axis current maximum value that is a q-axis current instruction maximum value in case of subtraction of $\alpha$ degrees from the first estimated magnetic pole position is Iqm2, the high-accuracy magnetic pole position estimator generating the second estimated magnetic pole position by adding $(360/2\pi)\tan^{-1}((Iqm2-Iqm1)/((Iqm1+Iqm2)\tan(\alpha)))$ to the first estimated magnetic pole position.

9. The motor control device according to Claim 8, wherein the $\alpha$ is equal to 45.

10. A magnetic pole position estimation method of a motor control device having: an electric angle operation section which converts a rotation angle of a synchronous motor detected by an encoder without a magnetic pole detecting function into an electric angle with respect to a position where power is turned on; a magnetic pole position estimator which estimates a magnetic pole position using the electric angle and generates an estimated magnetic pole position; a speed operation section which converts the rotation angle to a rotation speed; a speed controller which generates d-axis and q-axis current instructions based on the rotation speed and a speed instruction; a current sensor which detects a three-phase current of the synchronous motor; a three-phase/two-phase converter which converts the three-phase current to d-axis and q-axis currents; a current controller which generates d-axis and q-axis voltage instructions based on the d-axis and q-axis currents and the d-axis and q-axis current instructions; a two-phase/three-phase converter which converts the d-axis and q-axis voltage instructions to U, V, and W-phase voltage instructions; and a PWM power converter, which pulse-width-modulates and power-amplifies the U, V, and W-phase voltage instructions, drives the synchronous motor, comprising:

   Step S1 for generating a first estimated rough magnetic pole position at a unit of ten degrees; and
   Step S2 for generating a second estimated accurate magnetic pole position at a unit of one degree after the first estimated magnetic pole position is generated.

11. The magnetic pole position estimation method of the motor control device according to Claim 10, wherein Step S1 includes:

a step for dividing a motor electric angle of 360 degrees by an integer n equal to or more than 4;
a step for setting an each center of respective electric angle regions to a magnetic pole position of 0 degrees; and
a step for generating the first estimated magnetic pole position from a distribution of one of the electric angle regions in which a reverse run happens.

12. The magnetic pole position estimation method of the motor control device according to Claim 10, wherein Step S2 includes:

a step for causing a q-axis current instruction maximum value in case of an operation according to a speed instruction for the magnetic pole position estimation at the magnetic pole position added by 45 degrees to the first estimated magnetic pole position to be a first q-axis current maximum value;
a step for causing a q-axis current instruction maximum value in case of subtraction of 45 degrees from the first estimated magnetic pole position to be a second q-axis current maximum value;
a step for making the second estimated magnetic pole position by subtracting and adding a certain angle from and to the first estimated magnetic pole position when the first q-axis current maximum value > the second q-axis current maximum value and when the first q-axis current maximum value < the second q-axis current maximum value, respectively; wherein
the motor control device generates the second estimated magnetic pole position by repeatedly adding or subtracting the certain angle to and from the second estimated magnetic pole position instead of the first estimated magnetic pole position until a difference between the first q-axis current maximum value and the second q-axis current maximum value becomes equal to or less than a certain value.

13. The magnetic pole position estimation method of the motor control device according to Claim 10, wherein Step S2 is for identifying an end of high-accuracy magnetic pole position estimation by the number of repetition instead of the difference between the first q-axis current maximum value and the second q-axis current maximum value equal to or less than the certain value, Step S2 being for generating the second estimated magnetic pole position by adding or subtracting $1/2^m$ times a certain angle when the number of repetition is a settable positive integer m.

14. The magnetic pole position estimation method of the motor control device according to Claim 10, wherein Step S2 includes:

a step for causing a first q-axis current maximum value that is a q-axis current instruction maximum value in case of a use of a magnetic pole position added by $\alpha$ degrees that is settable to the first estimated magnetic pole position and an operation according to a speed instruction for the magnetic pole position estimation to be Iqm1;
a step for causing a second q-axis current maximum value that is a q-axis current instruction maximum value in case of subtraction of $\alpha$ degrees from the first estimated magnetic pole position to be Iqm2; and
a step for generating the second estimated magnetic pole position by adding $(360/2\pi)\tan^{-1}((Iqm2-Iqm1)/((Iqm1+Iqm2)\tan(\alpha)))$ to the first estimated magnetic pole position.

15. The magnetic pole position estimation method of the motor control device according to Claim 14, wherein the $\alpha$ is equal to 45.

# FIG.1

FOR REGULAR
CONTROL

FOR MAGNETIC
POLE POSITION
ESTIMATION

FIG.2

FIG.3

①MAXIMUM SPEED

②ACCELERATION AND DECEKERATION TIME

③CONSTANT SPEED TIME

④STOP TIME

SPEED INSTRUCTION

TIME

# FIG.4

START

S101 — MAGNETIC POLE POSITION = 0 DEGREES

S102 — OPERATION ACCORDING TO SPEED INSTRUCTION

NORMAL (NO REVERSE RUN)

REVERSE RUN (ROTATION IN OPPOSITE SPEED INSTRUCTION)

S104 — MAKE SPEED INSTRUCTION ZERO

S103 — ADD 360 DEGREES/n TO MAGNETIC POLE POSITION

n IS THE NUMBER BY WHICH ELECTRIC ANGLE OF 360 DEGREES IS DIVIDED

S105 — ADD 180 DEGREES TO MAGNETIC POLR POSITION AND ZERO SPEED STOP

S106 — SAVE MAGNETIC POLE POSITION IN CASE OF REVERSE RUN

S107 — ADD (−180 DEGREES +360 DEGREES/n) TO MAGNETIC POLE POSITION

S108 — n−TIMES COMPLETION? No

Yes

S109 — THE NUMBER OF REVERSE RUNS<a−TIMES? Yes

No

S110 — THE NUMBER OF REVERSE RUNS >b−TIMES ? Yes

No

S111 — MAGNETIC POLE POSITION RELATION IRREGULAR ? Yes

No

S112 — INCREASE SPEED LOOP GAIN

S113 — CLEAR THE NUMBER OF REVERSE RUNS AND REVERSE RUN MAGNETIC POLE POSITION

S114 — MAGNETIC POLE POSITION = 0 DEGREES

S115 — COMPUTE AVERAGE VALUE OF MAGNETIC POLE POSITIONS HAVING RUN IN REVERSE

S116 — CAUSE OF SUM OF REVERSE RUN MAGNETIC POLE POSITION AVERAGE VALUE AND 180 DEGREES TOBE ESTIMATED MAGNETIC POLE POSITION

END

# FIG.5

TEMPORARY Q-AXIS(CONTROL AXIS)

REAL Q-AXIS(MOTOR AXIS)

I*1data

I=Te/KT

S-POLE

TEMPORARY D-AXIS(CONTROL AXIS)

+45deg

N-POLE

REAL D-AXIS(MOTOR AXIS)

$\theta$ err

MAGNETIC POLE DEVIATION ANGLE

AXIS ESTIMATED AT STEP S1

# FIG.6

REAL Q-AXIS(MOTOR AXIS)

S-POLE

I=Te/KT

I*2data

TEMPORARY Q-AXIS(CONTROL AXIS)

N-POLE

REAL D-AXIS(MOTOR AXIS)

−45deg

θ err

MAGNETIC POLE DEVIATION

TEMPORARY
D-AXIS(CONTROL AXIS)

AXIS ESTIMATED AT STEP S1

# FIG.7

```
                    ┌─────────────┐
                    │    START    │
                    └──────┬──────┘
                           │
S201 ┌─────────────────────▼─────────────────────┐
     │ SET MAGNETIC POLE POSITION ESTIMATED       │
     │ AT STEP S1 TO MAGNETIC POLE POSITION       │
     └─────────────────────┬─────────────────────┘
                           │
S202 ┌─────────────────────▼─────────────────────┐
     │ SET θ TO MAGNETIC POLE POSITION            │
     │ CORRECTION ANGLE                           │
     └─────────────────────┬─────────────────────┘
                           │
S203 ┌─────────────────────▼─────────────────────┐
     │ ADD 45 DEGREES TO MAGNETIC POLE            │
     │ POSITION AND ALLOW OPERATION IN            │
     │ ACCORDANCE WITH SPEED INSTRUCTION          │
     └─────────────────────┬─────────────────────┘
                           │
S204 ┌─────────────────────▼─────────────────────┐
     │ SAVE q-AXIS CURRENT INSTRUCTION            │
     │ VALUE(I*1data) OF POSITIVE SIDE            │
     └─────────────────────┬─────────────────────┘
                           │
S205 ┌─────────────────────▼─────────────────────┐
     │ SUBSTRACT 90 DEGREES FROM MAGNETIC         │
     │ POLE POSITION AND ALLOW OPERATION IN       │
     │ ACCORDANCE WITH SPEED INSTRUCTION          │
     └─────────────────────┬─────────────────────┘
                           │
S206 ┌─────────────────────▼─────────────────────┐
     │ SAVE q-AXIS CURRENT INSTRUCTION            │
     │ VALUE(I*2data) OF POSITIVE SIDE            │
     └─────────────────────┬─────────────────────┘
```

S207  THE NUMBER OF MAGNETIC POLE POSITION CORRECTIONS=m-TIMES?

No

S208  I*1data ≦ I*2data ?

No

Yes

S209  ADD (90 DEGREES + CORRECTION ANGLE) TO MAGNETIC POLE POSITION

S210  ADD(90 DEGREES − CORRECTION ANGLE) TO MAGNETIC POLE POSITION

S211  DIVIDE MAGNETIC POLE POSITION CORRECTION ANGLE BY TWO

Yes

S212  ADD $\tan^{-1}$(I*2data/I*1data) TO MAGNETIC POLE POSITION

S213  MAKE PRESENT MAGNETIC POSITION FINALLY ESTIMATED MAGNETIC POSITION

END

## INTERNATIONAL SEARCH REPORT

| International application No. |
| --- |
| PCT/JP2008/068266 |

**A. CLASSIFICATION OF SUBJECT MATTER**
*H02P21/00(2006.01)i, H02P27/04(2006.01)i*

According to International Patent Classification (IPC) or to both national classification and IPC

**B. FIELDS SEARCHED**

Minimum documentation searched (classification system followed by classification symbols)
H02P21/00, H02P27/04

Documentation searched other than minimum documentation to the extent that such documents are included in the fields searched
Jitsuyo Shinan Koho          1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
| --- | --- | --- |
| A | JP 2001-78487 A  (Fanuc Ltd.),<br>23 March, 2001 (23.03.01),<br>Full text; all drawings<br>& US 6445154 B1          & EP 1085650 A3<br>& EP 1085650 A2 | 1-15 |
| A | JP 2000-312493 A  (Meidensha Corp.),<br>07 November, 2000 (07.11.00),<br>Full text; all drawings<br>(Family: none) | 1-15 |
| A | JP 2002-272175 A  (Sumitomo Heavy Industries, Ltd.),<br>20 September, 2002 (20.09.02),<br>Full text; all drawings<br>(Family: none) | 1-15 |

☐ Further documents are listed in the continuation of Box C.      ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 December, 2008 (18.12.08) | Date of mailing of the international search report<br>06 January, 2009 (06.01.09) |
| --- | --- |
| Name and mailing address of the ISA/<br>    Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006296027 A